(19) Europäisches Patentamt / European Patent Office / Office européen des brevets

(11) EP 2 241 587 B1

(12) # EUROPEAN PATENT SPECIFICATION

(45) Date of publication and mention of the grant of the patent:
**25.09.2013 Bulletin 2013/39**

(21) Application number: **09708990.8**

(22) Date of filing: **06.02.2009**

(51) Int Cl.:
***C08G 77/38*** (2006.01) ***C08F 290/06*** (2006.01)
***C08F 299/08*** (2006.01) ***C08G 77/06*** (2006.01)
***C08G 77/20*** (2006.01) ***G02C 7/04*** (2006.01)
***C08G 77/50*** (2006.01) ***C08F 8/42*** (2006.01)
***C08F 283/12*** (2006.01) ***G02B 1/04*** (2006.01)
***C08G 77/46*** (2006.01)

(86) International application number:
**PCT/JP2009/052019**

(87) International publication number:
**WO 2009/099164 (13.08.2009 Gazette 2009/33)**

(54) **HYDROPHILIC POLYSILOXANE MONOMER, AND PRODUCTION METHOD AND APPLICATION THEREOF**

HYDROPHILES POLYSILOXAN-MONOMER SOWIE VERFAHREN ZU SEINER HERSTELLUNG UND ANWENDUNG

MONOMÈRE DE POLYSILOXANE HYDROPHILE, PROCÉDÉ DE PRODUCTION ET APPLICATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.02.2008 JP 2008028642**

(43) Date of publication of application:
**20.10.2010 Bulletin 2010/42**

(73) Proprietor: **CooperVision International Holding Company, LP**
**St. Michael (BB)**

(72) Inventors:
- **UEYAMA, Hiroyuki**
**Tokyo 101-8101 (JP)**
- **IKAWA, Seiichiro**
**Tokyo 101-8101 (JP)**
- **IWATA, Junichi**
**Tokyo 101-8101 (JP)**

(74) Representative: **Critten, Matthew Peter et al**
**Abel & Imray**
**20 Red Lion Street**
**London, WC1R 4PQ (GB)**

(56) References cited:
**WO-A1-01/44861**
**JP-A- 6 032 855**
**JP-A- 6 279 560**
**JP-A- 8 245 737**
**JP-A- 10 212 355**
**JP-A- 56 094 323**
**JP-A- 56 094 324**
**JP-A- 2003 192 790**
**JP-A- 2003 192 790**
**JP-A- 2003 277 506**
**US-A- 4 260 725**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 241 587 B1

## Description

Technical Field

The present invention relates to novel hydrophilic polysiloxane macromonomers, methods of production thereof, and ophthalmic lenses employing the hydrophilic polysiloxane macromonomers and, in particular, to a contact lens. In more detail, the present invention relates to a contact lens having both of oxygen permeability and a hydrophilic property, and raw materials therefor.

Background Art

High oxygen permeability is demanded for ophthalmic lenses, in particular, for contact lenses, which need supply of oxygen, necessary for maintaining corneal health statuses, from an air medium. In recent years, contact lenses, in which siloxane monomers as raw materials are employed for improving oxygen permeability, have been developed. High hydrophilic properties as well as oxygen permeability are also demanded for contact lenses. Contact lenses with high hydrophilic properties are said to generally have good wear comfort and be comfortably wearable for long time. Hydrophilic monomers are commonly used as raw materials in order to improve hydrophilic property of contact lenses.

To produce a contact lens having both of high oxygen permeability and a high hydrophilic property, it is necessary to use both of a siloxane monomer and a hydrophilic monomer as raw materials; however, since a siloxane monomer has a high hydrophobic property in general and thus has poor compatibility with a hydrophilic monomer, phase separation occurs, which makes it difficult to produce transparent contact lenses. In order to solve this problem, hydrophilized siloxane monomers have been developed.

For example, hydrophilic contact lenses produced from polysiloxane containing hydrophilic side chains are disclosed in Patent Document 1 and Patent Document 2, wherein compounds containing polyether groups, hydroxyl groups, amide groups, and quaternary amine groups as hydrophilic side chains are selected; however, since the specifically disclosed polysiloxane contains comparatively many hydrophilic side chains which have a comparatively low molecular weight, per molecule, a balance between a hydrophilic property and oxygen permeability is inadequate, and it was difficult to use the polysiloxane as a raw material for an ophthalmic lens with high oxygen permeability and a high hydrophilic property.

A plastic molding article produced from plastic which includes a compound having a group with a polymerizable double bond, a hydroxyl group, an organosiloxane group, and an amide group as a polymerization ingredient is disclosed in Patent Document 3. The polymerization ingredient allows production of the plastic molding article with high transparency, high oxygen permeability, good water wettability, and good mechanical properties. However, since the specifically disclosed compound had short siloxane chains, effective oxygen permeability was not obtained. In addition, since the compound had only one polymerizable functional group per molecule, adequate strength was precluded.

A hydrogel soft contact lens comprising a hydrophilic siloxane monomer and a copolymer thereof is disclosed in Patent Document 4, Patent Document 5 and Patent Document 6, wherein the hydrophilic siloxane monomers contain main chains, in which polymerizable groups and polysiloxane chains are bound through urethane or urea groups, including fluorine- substituted hydrocarbon and polyoxyalkylene groups as side chains. Since hydrophilic siloxane monomers containing urethane or urea groups have high intermolecular forces, copolymers thereof are also prone to have a comparatively high modulus of elasticity, and there were cases where flexibility greatly affecting the wear comfort of contact lenses was lost.

[Patent Document 1] Japanese Patent Publication No. 62- 29776
[Patent Document 2] Japanese Patent Publication No. 62- 29777
[Patent Document 3] Japanese Patent No. 3, 644, 177
[Patent Document 4] International Publication WO 01/044861
[Patent Document 5] International Publication WO 2006/026474
[Patent Document 6] Japanese Patent No. 3, 441, 024

US4260725 discloses a contact lens comprising a polysiloxane which is $\alpha$, $\omega$ terminally bonded through divalent hydrocarbon groups to polymerizably activated unsaturated groups and which contains hydrophilic side chains.

JP 2003 192790 discloses a radically polymerizable organosiloxane mixture comprising (A) a radically polymerizable organopolysiloxane having a reactive functional group or a silicon- bonded hydrogen atom at either terminal, (B) a radically polymerizable organopolysiloxane have a reactive functional group or a silicon- bonded hydrogen atom at each terminal, and (C) a reactive organopolysiloxane free from a radically polymerizable group.

Disclosure of Invention

Problems to be Solved by the Invention

The present invention addresses problems of providing an ophthalmic lens, in particular, contact lens, which has both of oxygen permeability and a hydrophilic property; and of providing a novel hydrophilic polysiloxane macromonomer, which can be used as a raw material thereof, and a method of production of the macromonomer.

Means for Solving Problems

As a result of extensive research, use of a hydrophilic polysiloxane macromonomer as a raw material, containing a polysiloxane main chain including polyoxyethylenes as hydrophilic side chains, was found to be effective at pursuing both of the high oxygen permeability and high hydrophilic property of an ophthalmic lens, in particular, a contact lens. In addition, oxygen permeability and hydrophilic property were found to be greatly affected by the length of the polysiloxane main chain, the length of the hydrophilic polyoxyethylene side chains and the number of the included side chains, and the invention was thus accomplished. A hydrophilic polysiloxane macromonomer, in which both terminals of a main chain have polymerizable functional groups and the polymerizable functional groups and polysiloxane of the main chain are bound through ester groups, was further found to be effective at adequately controlling strength and a modulus of elasticity which greatly affect the usability and wear comfort of a contact lens.

Specifically, a hydrophilic polysiloxane macromonomer presented in general formula (1) is exemplified:

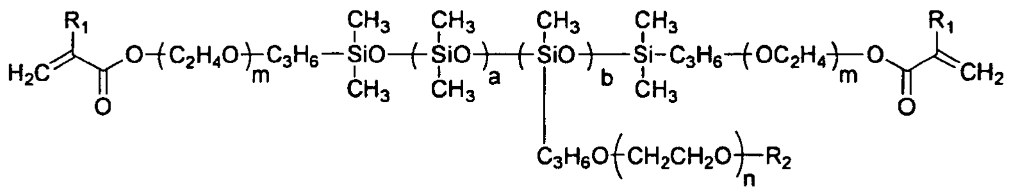

(1)

wherein $R_1$ is selected from either hydrogen or a methyl group; $R_2$ is selected from either of hydrogen or a $C_{1-4}$ hydrocarbon group; m represents an integer of from 0 to 10; n represents an integer of from 4 to 100; a and b represent integers of 1 or more; a+b is equal to 20-500; b/(a+b) is equal to 0.01-0.22; and the configuration of siloxane units includes a random configuration.

It is to be noted that "the configuration of siloxane units includes a random configuration" means that the siloxane units containing polyoxyethylene as hydrophilic side chains and siloxane units excluding the polyoxyethylene side chains may be arranged randomly or in block form, or random and block configurations may coexist in one molecule. A rate between random and block configurations may be also optional, for example, only a random or block configuration may be included in one molecule, or the random and block configurations may be included at an optional rate.

The present invention also relates to hydrophilic polysiloxane macromonomers, wherein a and b, presented in the general formula (1), represent 25-200 and 2-20, respectively; to hydrophilic polysiloxane macromonomers, wherein n, presented in the general formula (1), represents 5-20; and to hydrophilic polysiloxane macromonomers, wherein a and b, presented in the general formula (1), represent 25-160 and 3-10, respectively, and n represents 5-15.

Furthermore, the present invention also relates to methods of producing hydrophilic polysiloxane macromonomers represented by general formula (1), which is obtained via polysiloxane represented by general formula (2) as an intermediate:

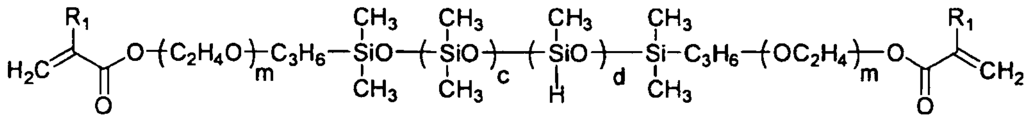

(2)

wherein $R_1$ is selected from either hydrogen or a methyl group; m represents an integer of from 0 to 10; c and d represent integers of 1 or more; c+d is equal to 20- 500; d/ (c+d) is equal to 0.01- 0.22; and the configuration of siloxane units includes a random configuration.

In more detail, the present invention also relates to a method in which the step of producing the polysiloxane intermediate represented by general formula (2) is carried out by ring-opening polymerization of cyclic dimethylsiloxane, cyclic siloxane having hydrosilane (Si-H), and siloxane having (meth) acrylic groups at both terminals using an acid catalyst and by stopping the ring-opening polymerization by neutralization reaction with a basic aqueous solution.

The present invention also relates to a method of producing the hydrophilic polysiloxane macromonomers represented by general formula (1) comprising hydrosilylation reaction of the intermediate represented by general formula (2) with polyethylene glycol allyl ether represented by general formula (3):

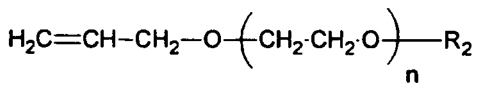 (3)

wherein $R_2$ is selected from either hydrogen or a $C_{1-4}$ hydrocarbon group; and n represents an integer of from 4 to 100. The hydrosilylation reaction may uses, as a catalyst therefor, a platinum-containing catalyst, and the production method may further comprise the step of washing the hydrophilic polysiloxane macromonomer with a solvent after the reaction.

Furthermore, the present invention also relates to homopolymers of the above- mentioned hydrophilic polysiloxane macromonomers, or to copolymers copolymerized the above- mentioned hydrophilic polysiloxane macromonomers with one or more polymerizable monomers, ophthalmic lens materials employing these polymers, and ophthalmic lenses and contact lenses employing these materials.

Effects of the Invention

Because a hydrophilic polysiloxane macromonomer of the present invention has good compatibility with polymerizable mixtures containing a hydrophilic monomer, a transparent copolymer is afforded, and high oxygen permeability can be also maintained. The hydrophilic polysiloxane macromonomer utilizing these characteristics is useful as an ophthalmic lens material with a high hydrophilic property and high oxygen permeability. It is to be noted that ophthalmic lenses, but are not limited in particular, are preferably understood to be lenses fitted to the anterior eye segment for purposes such as vision correction, test and therapy, and preferably include, e.g., an intraocular lens, a corneal lens, and a contact lens.

Brief Description of the Drawings

FIG. 1 is a $^1$H-NMR chart of a hydrophilic polysiloxane macromonomer A.
FIG. 2 is an infrared absorption chart of a hydrophilic polysiloxane macromonomer A.

Best Mode for Carrying Out the Invention

The present invention is specifically described below.
In the aforementioned general formula (1), representing the raw material of an ophthalmic lens with both of high oxygen permeability and a high hydrophilic property, in particular, a contact lens, a combination of a+b, determining the length of a polysiloxane main chain, b/(a+b), determining the percentage content of hydrophilic side chains, and the number n of bound polyoxyethylenes which are the hydrophilic side chains, is important, wherein a+b is equal to 20-500, b/ (a+b) is equal to 0.01-0.22, and n represents 4-100; preferably a+b is equal to 27-220, b/(a+b) is equal to 0.01-0.15, and n represents 5-20; more preferably, a+b is equal to 28-160, b/(a+b) is equal to 0.01-0.10, and n represents 5-15. Furthermore, a and b per specific hydrophilic polysiloxane macromonomer molecule are preferably equal to 25-200 and 2-20, respectively; more preferably, 25-160 and 3-10, respectively, allowing a balance between oxygen permeability and a hydrophilic property.

Various methods of synthesizing a hydrophilic polysiloxane macromonomer disclosed in the present invention are conceivable and include, for example, a method as described below, via a polysiloxane intermediate represented by general formula (2) shown below.
Specifically, ring-opening polymerization of a mixture of cyclic dimethylsiloxane, cyclic siloxane having hydrosilane (Si-H), and disiloxane having (meth)acrylic groups at both terminals is carried out using an acid catalyst, such as sulfuric acid, trifluoromethanesulfonic acid or acid clay, to provide a polysiloxane intermediate containing (meth)acrylic groups at both terminals as shown in general formula (2):

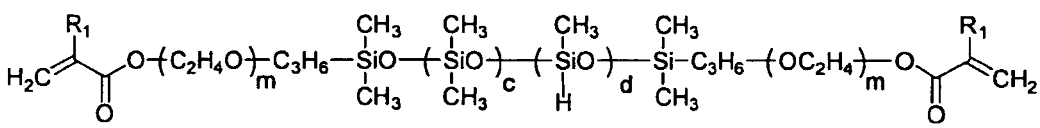 (2)

wherein $R_1$ is selected from either hydrogen or a methyl group; m represents an integer of from 0 to 10; c and d represent integers of 1 or more; c+d is equal to 20-500; d/(c+d) is equal to 0.01-0.22; and the configuration of siloxane units includes a random configuration.

In general formula (2), the ratio and total number of c and d may be optionally controlled by varying the compounding ratio of cyclic dimethylsiloxane, cyclic siloxane having hydrosilane (Si-H), and disiloxane having (meth)acrylic groups at both terminals. A polysiloxane intermediate obtained in this manner has no single molecular weight but has a molecular weight distribution as in case of a typical synthetic polymer.

A synthesis method is described in more detail. After ring- opening polymerization of a mixture of cyclic dimethylsiloxane, cyclic siloxane having hydrosilane (Si- H), and siloxane having (meth) acrylic groups at both terminals using an acid catalyst such as sulfuric acid, trifluoromethanesulfonic acid or acid clay, preferably trifluoromethanesulfonic acid having a high acidity and a high catalytic activity, the reaction can be stopped by addition of a basic aqueous solution. The basic aqueous solution preferably has a pH of more than 7 but 14 or less, more preferably a weakly basic pH of more than 7 but 9 or less which inhibits a side reaction from occurring.

As a reaction solvent, no solvent may be used in the reaction, or a solvent that does not inhibit the ring- opening polymerization by an acid catalyst may be used. Reaction solvents include, for example, tetrahydrofuran, dioxan, hexane, cyclohexane, heptane, cycloheptane, chloroform, dichloromethane, dichloroethane, dimethoxyethane, toluene, benzene, xylene, diethyl ether, diisoprpyl ether, acetone, and methyl ethyl ketone. Among them, the solvents excluding hetero elements, such as oxygen and nitrogen, which suppress the activity of an acid catalyst, are preferred.

Reaction temperature may be in the range of 0- 150°C, preferably 20- 100°C, more preferably 25- 80°C. The higher reaction temperature results in acceleration of the reaction, but unfavorably allows occurrence of a side reaction due to polymerization of, e.g., (meth) acrylic groups.

A polymerization inhibitor, e.g., HQ (hydroquinone), BHT (2, 6- di- t- butyl- 4- methylphenol) or MQ (p- methoxyphenol), may be previously added into a reaction system to inhibit a side reaction due to radical polymerization of, e.g., (meth) acrylic groups during ring- opening polymerization.

An example of a method of producing a polysiloxane intermediate represented by the aforementioned general formula (2) includes a method comprising the step of synthesizing a compound represented by general formula (6) as an intermediate, as shown in the following reaction formula (b):

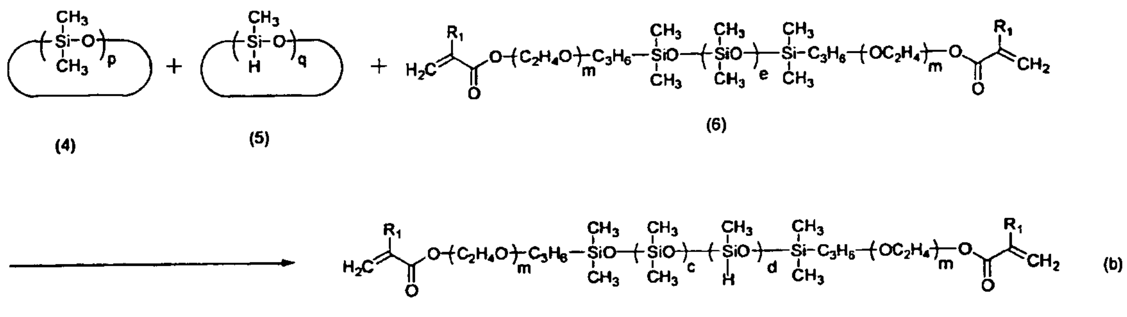

(4) (5) (6) (2) (b)

wherein $R_1$ is selected from either hydrogen or a methyl group; m represents an integer of from 0 to 10; p and q represent integers of from 3 to 10, preferably from 3 to 5; c and d represent integers of 1 or more; c+d is equal to 20-500; d/(c+d) is equal to 0.01-0.22; e represents an integer of from 0 to 500; and the configuration of siloxane units includes a random configuration.

Siloxane having (meth)acrylic groups at both terminals, represented by general formula (6) is commercially available as TSL9706 (manufactured by Momentive), and also may be synthesized by following methods, for example.

A first example of a method of synthesizing siloxane of general formula (6) is exhibited in reaction formulas (c) and (d) described below. That is, the example includes a method comprising carrying out hydrosilylation reaction between siloxane having SiH groups at both terminals represented by general formula (9) and polyoxyalkylene having a terminal hydroxyl group and an allyl group represented by general formula (10) to generate a polyoxyalkylene-polysiloxane block copolymer with both terminal hydroxyl groups represented by general formula (7) in the reaction formula (c); and then reacting the block copolymer (7) obtained in the above-mentioned reaction with (meth)acrylic acid represented by general formula (8) or a reactive derivative thereof to synthesize siloxane having (meth) acrylic groups at both terminals represented by general formula (6) in the following reaction formula (d):

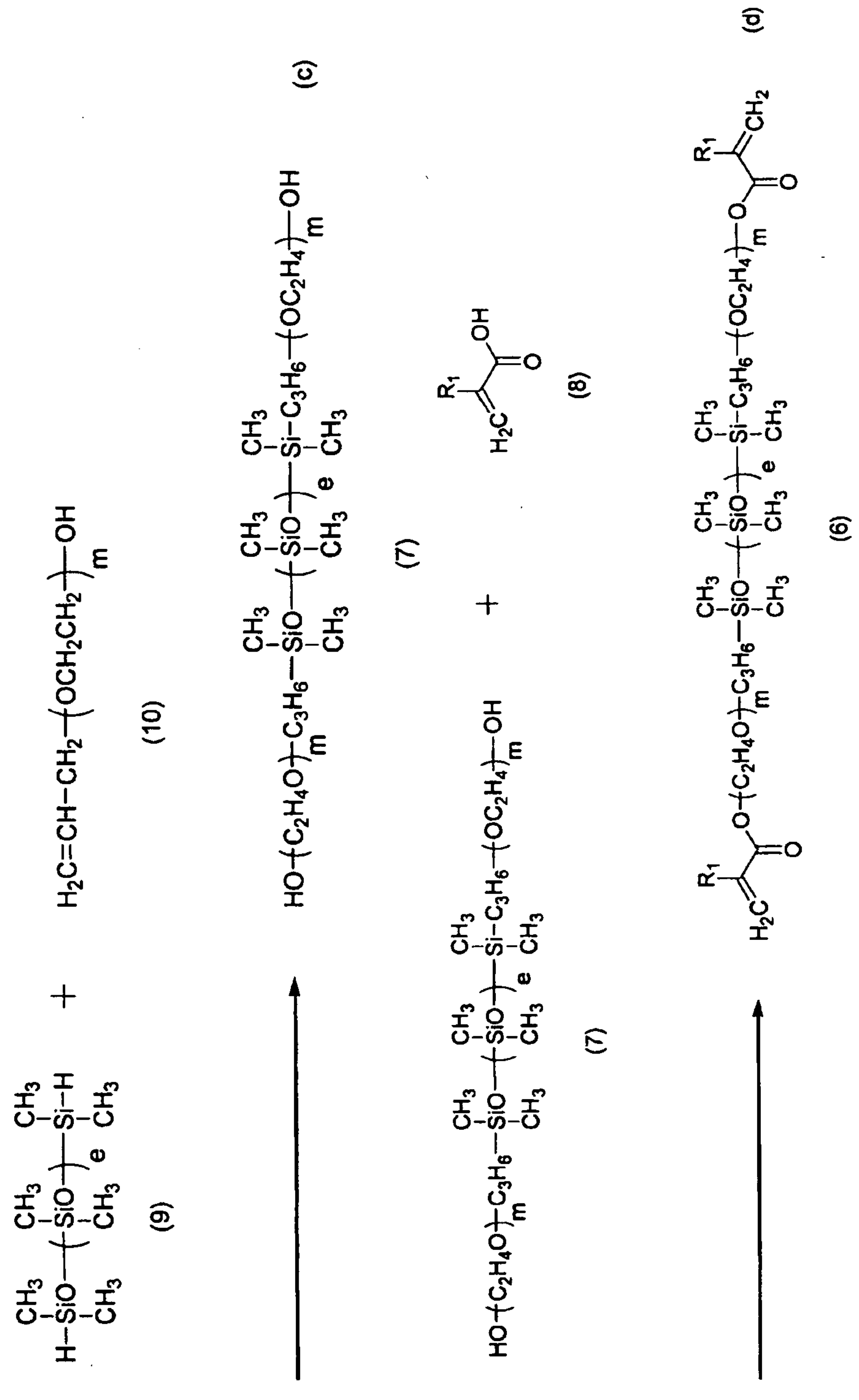

(9) (10) (c)

(7) (8) (6) (d)

wherein $R_1$ is selected from either hydrogen or a methyl group; m represents an integer of from 0 to 10; and e represents an integer of from 0 to 500.

Another example of a method of synthesizing siloxane of general formula (6) is exhibited in reaction formulas (e) and (f) as described below. That is, the other example includes a method comprising reacting polyoxyalkylene having a terminal hydroxyl group and an allyl group represented by general formula (10) with (meth)acrylic acid represented by general formula (8) or a reactive derivative thereof to generate polyoxyalkylene having a terminal allyl group and a (meth)acrylic group represented by general formula (11) in reaction formula (e); and then carrying out hydrosilylation reaction of (11) obtained in the above-mentioned reaction with siloxane having SiH groups at both terminals represented by general formula (9) to synthesize siloxane having (meth)acrylic groups at both terminals represented by general formula (6) in the following reaction formula (f):

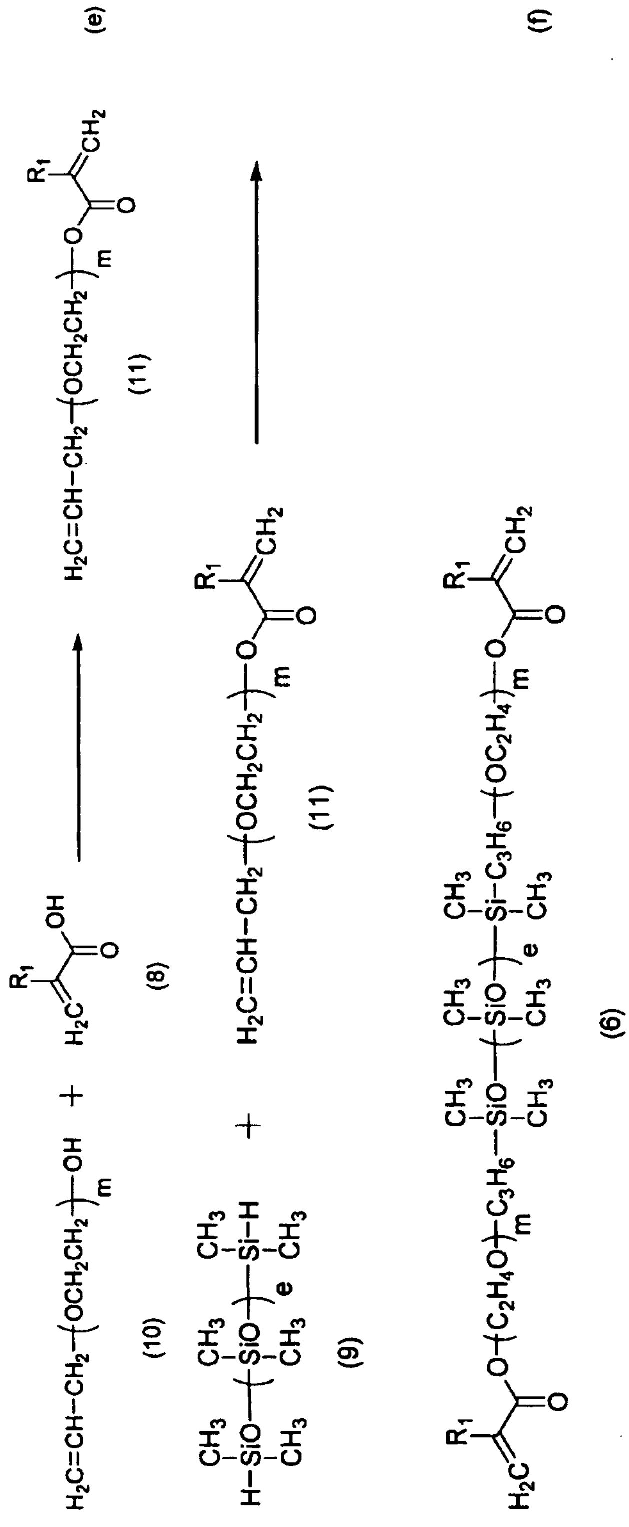

(e)

(10) (8) (11)

(f)

(9) (11) (6)

wherein $R_1$ is selected from either hydrogen or a methyl group; m represents an integer of from 0 to 10; and e represents an integer of from 0 to 500.

Next, a hydrophilic polysiloxane macromonomer represented by general formula (1) may be obtained by an addition of polyethylene glycol allyl ether to the intermediate presented in general formula (2) utilizing a so- called hydrosilylation reaction, which is an addition reaction to hydrosilane using a transition metal catalyst such as chloroplatinic acid. The hydrophilic polysiloxane macromonomer also becomes a compound having a molecular weight distribution as well as a polysiloxane intermediate thereof.

For polyethylene glycol allyl ether as used herein, various compounds may be used, among them compounds

represented by the following general formula (3) are preferable. In the formula (3), $R_2$ is selected from either hydrogen or a $C_{1-4}$ hydrocarbon group; n represents an integer of from 4 to 100, particularly preferably 5 to 20, further preferably 5 to 15; and $R_2$ is preferably hydrogen or a methyl group.

In addition, when carrying out a reaction, it is important to add a larger amount of polyethylene glycol allyl ether than a stoichiometric ratio, allowing inhibition of a side reaction due to an unreacted SiH group, e.g., inhibition of hydrolysis to obtain a macromonomer of stable quality. In addition, surplus polyethylene glycol allyl ether can be easily removed by a purification method with a solvent as described below, after the reaction.

$$H_2C{=}CH{-}CH_2{-}O{-}\left(CH_2CH_2O\right)_n{-}R_2 \qquad (3)$$

Transition metal catalysts for hydrosilylation reaction include, e.g., ruthenium, rhodium, iridium, osmium, and platinum; preferably a platinum-containing catalyst; more preferably hexachloroplatinic acid, 1,3-divinyltetramethyldisiloxane platinum complex, platinum carried on activated carbon, and platinum (IV) oxide; most preferably hexachloroplatinic acid exhibiting a high catalytic activity.

For a reaction solvent, a solvent that does not inhibit hydrosilylation reaction and react itself may be used. Reaction solvents include, for example, isopropanol, tetrahydrofuran, dioxan, hexane, cyclohexane, heptane, cycloheptane, chloroform, dichloromethane, dichloroethane, dimethoxyethane, benzene, toluene, and xylene. In particular, when reacting polyethylene glycol allyl ether in general formula (3) in which $R_2$ is hydrogen, a method of protecting a hydroxyl group to inhibit side reaction between hydroxyl and SiH groups may be used, more preferably, a method of adding a buffer agent is particularly easily used. For example, potassium acetate is particularly useful.

Reaction temperature may be in the range of 0-150°C, preferably 25-100°C, more preferably 35-85°C. The higher reaction temperature results in acceleration of the reaction, but unfavorably allows occurrence of a side reaction due to polymerization of, e.g., (meth)acrylic groups.

A washing operation with a solvent may be performed as a purification method following hydrosilylation reaction. A hydrophilic polysiloxane macromonomer of interest can be precipitated and separated by dissolution of a crude product in a first solvent, followed by addition of a second solvent. The first solvent as used herein refers to a solvent in which a macromonomer represented by general formula (1) is easily dissolved, and the second solvent refers to a solvent in which the macromonomer represented by general formula (1) is difficult to dissolve and polyethylene glycol allyl ether used is dissolved.

First solvents include methanol, ethanol, propanol, isopropanol, butanol, isobutanol, acetone, tetrahydrofuran, dioxan, chloroform, dichloromethane, dichloroethane, and ethylene glycol. Second solvents include, e.g., water.

A macromonomer of interest can be obtained by distilling out a solvent after purification. In this context, an appropriate amount of polymerization inhibitor, such as HQ (hydroquinone), BHT (2, 6- di- t- butyl- 4- methylphenol) or MQ (p-methoxyphenol), may be also previously added in order to prevent gelation.

In addition to the production method via the intermediate represented by general formula (2), there is also a method of producing the hydrophilic polysiloxane macromonomer by production of an polyoxyalkylene group-containing intermediate having reactive groups such as hydroxyl groups at both terminals, followed by introduction of a polymerizable group such as a (meth)acrylic group. However, since this method has difficult purification and needs extended steps, the production method via the intermediate represented by general formula (2), as disclosed herein, is industrially useful and preferable.

Also, the present invention is to disclose a polymer of hydrophilic polysiloxane macromonomer alone, presented in the general formula (1), or a copolymer obtained by copolymerizing said hydrophilic polysiloxane macromonomer with one or more polymerizable monomers, and an ophthalmic lens material. Ophthalmic lenses to which the present invention is applicable include an intraocular lens and a corneal lens, and further preferably, contact lenses.

A copolymerizable monomer will now be described below. Any monomer may be used if it is copolymerizable in the present invention, in particular, hydrophilic monomers are useful. That is because the hydrophilic monomers improve the surface hydrophilic properties of hydrophilic polysiloxane macromonomer copolymers and vary water content of the copolymer. Examples of copolymerizable monomers include a hydroxyl group- containing monomer such as 2-hydroxyethyl methacrylate, 2- hydroxypropyl methacrylate, 2- hydroxybutyl acrylate, 4- hydroxybutyl acrylate or glycerol methacrylate; a hydroxyl group- containing monomer having a fluorine- containing substituent such as 3- (1, 1, 2, 2-tetrafluoroethoxy)- 2- hydroxypropyl methacrylate; a carboxylic acid group- containing monomer such as methacrylic acid, acrylic acid, itaconic acid, fumaric acid or maleic acid; an alkyl- substituted amino group- containing monomer such as dimethylaminoethyl methacrylate or diethylaminoethyl methacrylate; an amide group- containing monomer such as N, N- dimethylacrylamide, N, N- diethylacrylamide, N- methylacrylamide, methylenebisacrylamide, diacetone acrylamide, N- vinyl pyrrolidone or N- vinyl- N- methylacetamide; and an oxyalkylene group- containing monomer such as methoxy polyethylene glycol monomethacrylate or polypropylene glycol monoacrylate.

An example of other usable monomers is a fluorine-containing monomer such as acrylic acid fluoroalkyl ester or methacrylic acid fluoroalkyl ester, including, e.g., trifluoroethyl acrylate, tetrafluoroethyl acrylate, tetrafluoropropyl acrylate, pentafluoropropyl acrylate, hexafluorobutyl acrylate, hexafluoroisopropyl acrylate and methacrylates corresponding to these acrylates, which may be selected depending on needed compatibility, hydrophilic property, water content and resistance to deposition.

Furthermore, monomers containing siloxane such as tris (trimethylsiloxy) silylpropyl methacrylate, α- butyl- ω- {3- [2- (2- methacryloxyethylcarbamoyloxy) ethoxy] propyl} po lydimethylsiloxane, a siloxane- containing macromonomer described in Examples A- 1, B- 1, C- 1 and D- 1 in Japanese Patent Publication No. H11- 502949, a siloxane- containing monomer (V2D25) described in U.S. Pat. No. 5260000, a siloxane- containing macromonomer described in Example 1 in Japanese Patent Publication No. 2003- 528183, a siloxane- containing macromonomer (A1, A2) in International Publication WO2004/063795, and a siloxane- containing macromonomer described in Example 1 in Japanese Patent Publication No. 2001- 311917 may be selected to improve oxygen permeability.

An alkyl acrylate ester monomer, an alkyl methacrylate ester monomer, or the like may be also used as needed, examples of which include methyl acrylate, ethyl acrylate, n-propyl acrylate, n-butyl acrylate, cyclopentyl acrylate, n-stearyl acrylate, and methacrylates corresponding to these acrylates.

Monomers described below may be optionally copolymerized to improve mechanical properties and dimensional stability. Examples of monomers to improve the mechanical properties include monomers affording high glass transition point polymers , which are aromatic vinyl compounds such as styrene, tert-butylstyrene, α-methylstyrene, and t-butyl methacrylate, cyclohexyl methacrylate, and isobornyl methacrylate.

Crosslinkable monomers are particularly useful in further improving dimensional stability, examples of which include ethylene glycol dimethacrylate, diethylene glycol dimethacrylate, triethylene glycol dimethacrylate, polyethylene glycol dimethacrylate, trimethylolpropane trimethacrylate, pentaerythritol tetramethacrylate, bisphenol A dimethacrylate, vinyl methacrylate, allyl methacrylate and acrylates corresponding to these methacrylates; triallyl isocyanurate; divinylbenzene; and N,N'-methylene bisacrylamide. One or a combination of two or more of these monomers may be used.

The properties of copolymers can be controlled by varying the compounding ratios of copolymerizable monomers. The ratios of a hydrophilic polysiloxane macromonomer, a hydrophilic monomer and another monomer are preferably 10-90%, 10-80% and 0-80%, respectively, more preferably 30-80%, 10-60% and 0-30%, respectively, most preferably, 30-70%, 20-50% and 5-20%, respectively, to afford effective properties for an ophthalmic lens material.

Furthermore, various additives may be added before and after polymerization as necessary. Examples of additives include various coloring agents, a UV absorbent, an antioxidizing agent, a surfactant, and a compatibilizer. A hydrophilic polymer such as polyvinyl pyrrolidone according to the aforementioned Japanese PCT National Publication No. 2003- 528183 may be also added to improve wettability.

Copolymerization methods which can be used include, e.g., radical polymerization, cationic polymerization, anionic polymerization, and addition polymerization. Among them, a radical polymerization method of making a photoinitiator present in a monomeric mixture to be irradiated with ultraviolet light to perform polymerization or a radical polymerization method of performing polymerization using an azo compound or organic peroxide by heating preferred. Examples of photoinitiators used include benzoinethylether, benzyldimethylketal, α, α'- diethoxyacetophenone, and 2, 4, 6- trimethylbenzoyldiphenylphosphineoxide. Examples of organic peroxides used include benzoyl peroxide and t-butyl peroxide. Examples of azo compounds used include azobisisobutyronitrile and azobisdimethylvaleronitrile.

A cross-linking polymer to be used as an ophthalmic lens material according to the present invention may be formed into a contact lens or the like by, e.g., a cast polymerization method of filling a mold with a mixture including a hydrophilic polysiloxane monomer, a copolymerization monomer and an initiator to perform radical polymerization by a well-known method; a method of performing polymerization by loading a monomer mixture in a rotating half mold; or a method of freezing and cutting a copolymer at low temperature.

A surface of a formed lens may be also further subjected to, for example, plasma treatment, ozone treatment, graft polymerization or plasma polymerization, to reform it, as needed.

## Examples

### Example 1

Dissolution of 9.7 g of 1, 3- bis (3- methacryloxypropyl)- 1, 1, 3, 3- tetramethyldisiloxane (TSL9706, Momentive), 139 g of octamethylcyclotetrasiloxane (LS8620, Shin- Etsu Chemical), and 7.5 g of 1, 3, 5, 7- tetramethylcyclotetrasiloxane (LS8600, Shin- Etsu Chemical) in 170 g of chloroform was performed, trifluoromethanesulfonic acid (Wako Pure Chemical Industries) was further added, and this mixture was stirred at 35°C. After 24 hours, 170 g of a 0.5% aqueous sodium hydrogen carbonate solution was added to stop the reaction. After having washed the reaction liquid with 170 g of pure water five times, the reaction solvent was distilled out under reduced pressure to obtain 140 g of a residue. After having washed the residue with 28 g of acetone and 140 g of methanol four times, the cleaning liquid was distilled out under

reduced pressure to obtain 100 g of an intermediate A.

Example 2

Dissolution of 15 g of the intermediate A and 10 g of methoxy polyethylene glycol allyl ether having a molecular weight of about 400 (Uniox PKA5007, NOF Corporation) in 30 g of isopropanol was performed, and 0.015 g of potassium acetate and 0.003 g of chloroplatinic acid were further added to the solution, and this mixture was stirred for 2 hours at 40°C. The reaction solvent was distilled out under reduced pressure, followed by washing the residue with 26 g of acetone and 6.5 g of pure water. After having repeated the same washing operation for six times, the cleaning liquid was distilled out under reduced pressure to obtain 13 g of a hydrophilic polysiloxane macromonomer A of interest.
The structural formula of a synthesized hydrophilic polysiloxane macromonomer is presented in general formula (12), wherein the configuration of siloxane units includes a random configuration. In general formula (12), a hydrophilic polysiloxane macromonomer represented by general formula (1), wherein $R_1$ represents a methyl group, is presented.
A $^1$H-NMR chart of the synthesized hydrophilic polysiloxane macromonomer A is shown in Fig. 1; and its infrared absorption chart is shown in Fig. 2.
The results of analysis of $^1$H-NMR of the hydrophilic polysiloxane macromonomer A exhibit a=about 90, b=about 5, n=about 7, m=0, and $R_2$ representing $CH_3$ in general formula (1).

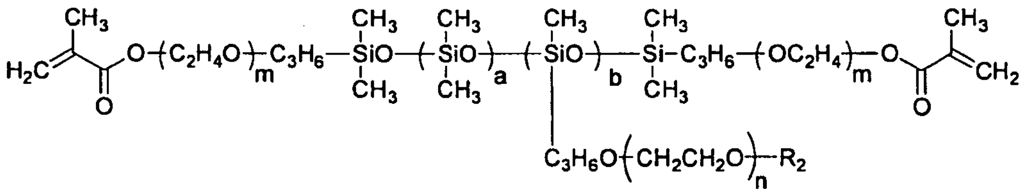

(12)

Example 3

Synthesis and washing were carried out by the same method as in Example 2, except that methoxy polyethylene glycol allyl ether (Uniox PKA5007) used in Example 2 was substituted with 10 g of polyethylene glycol allyl ether having a molecular weight of about 400 (PKA5002, NOF Corporation), to obtain 13 g of a hydrophilic polysiloxane macromonomer B of interest.
The results of analysis of $^1$H-NMR exhibit a=about 90, b=about 5, n=about 7, m=0, and $R_2$ representing hydrogen in general formula (1).

Example 4

Synthesis was carried out by the same method as in Example 2, except that methoxy polyethylene glycol allyl ether used in Example 2 (Uniox PKA5007) was substituted with 10 g of Uniox PKA5010 having a molecular weight of about 1500 (NOF Corporation). After termination of the reaction, 100 g of water was added to the reaction liquid, and ultrafiltration was carried out with an ultrafilter P0200 (Advantec). After purification, the solvent was distilled out to obtain 5 g of a hydrophilic polysiloxane macromonomer C.
The results of analysis of $^1$H-NMR exhibit a=about 90, b=about 5, n=about 35, m=0, and $R_2$ representing $CH_3$ in general formula (1).

Example 5

Synthesis was carried out by the same method as in Example 1, except that the amount of LS8600 was changed to 15 g, to obtain 110 g of an intermediate B. Furthermore, 15 g of the intermediate B and 20 g of Uniox PKA5007 were dissolved in 30 g of isopropanol, and synthesis and washing were performed as in Example 2 to obtain 10 g of a hydrophilic polysiloxane macromonomer D of interest.
The results of analysis of $^1$H-NMR exhibit a=about 85, b=about 10, n=about 7, m=0, and $R_2$ representing $CH_3$ in general formula (1).

Example 6

Synthesis was carried out by the same method as in Example 1, except that the amount of LS8620 was changed to 200 g, to obtain 120 g of an intermediate C. Furthermore, synthesis and washing were carried out by the

same method as in Example 2, except that the intermediate A in Example 2 was substituted with 15 g of the intermediate C, to obtain 14 g of a hydrophilic polysiloxane macromonomer E of interest.
The results of analysis of $^1$H-NMR exhibit a=about 130, b=about 5, n=about 7, m=0, and $R_2$ representing $CH_3$ in general formula (1).

Example 7

Dissolution of 6 g of an intermediate B in accordance with Example 5 and 12 g of polyethylene glycol allyl ether having a molecular weight of about 750 (Uniox PKA5004, NOF Corporation) in 15 g of isopropanol was performed, 0.007 g of potassium acetate and 0.001 g of chloroplatinic acid were further added, and this mixture was reacted for 45 minutes at 80°C, further for 1 hour under reflux. Addition of 100 g of water to this reaction liquid was performed, and ultrafiltration was carried out with an ultrafilter P0200 (Advantec). After purification, the solvent was distilled out to obtain 3 g of a hydrophilic polysiloxane macromonomer F.
The results of analysis of $^1$H-NMR exhibit a=about 85, b=about 10, n=about 15, m=0, and $R_2$ representing hydrogen in general formula (1).

Example 8

Dissolution of 100 g of $\alpha$, $\alpha$)- bis [3- (2- hydroxyethoxy) propyl] polydimethylsiloxane having a molecular weight of about 1000 (FM4411, Chisso Corporation), 32 g of methacryloyl chloride (Wako Pure Chemical Industries), and 40 g of triethylamine in 500 g of chloroform, and this solution was stirred overnight. Addition of 100 g of methanol to the reaction liquid was performed and this mixture was stirred for 2 hours, followed by distilling out the reaction solvent under reduced pressure to obtain 135 g of a residue. The residue was washed with 100 g of methanol and 30 g of water five times, followed by distilling out a cleaning liquid under reduced pressure to obtain 103 g of an intermediate D.

Example 9

Synthesis and washing were carried out by the same method as in Example 1, except that TSL9706 used in Example 1 was substituted with 50 g of the intermediate D, to obtain 125 g of an intermediate E. Furthermore, 15 g of the intermediate E and 10 g of Uniox PKA5007 were dissolved in 30 g of isopropanol, and synthesis and washing were performed as in Example 2 to obtain 11 g of a hydrophilic polysiloxane macromonomer G of interest.
The results of analysis of $^1$H-NMR exhibit a=about 160, b=about 4, n=about 7, m=1, and $R_2$ representing $CH_3$ in general formula (1).

Comparative Example 1

Synthesis and washing were carried out by the same method as in Example 1, except that the amounts of TSL9706, LS8620 and LS8600 were changed to 49 g, 95 g and 0 g, respectively, to obtain 105 g of a hydrophilic polysiloxane macromonomer H of interest.
The results of analysis of $^1$H-NMR exhibit a=about 15, b= 0, n= 0, and m=0 in general formula (1).

Comparative Example 2

Synthesis was carried out by the same method as in Example 1, except that the amount of LS8600 was changed to 38 g, to obtain 125 g of an intermediate F. Furthermore, synthesis and washing were carried out by the same method as in Example 2, except that the intermediate A and Uniox PKA5007 in Example 2 were substituted with 15 g of the intermediate F and 13 g of allyloxy ethanol (Wako Pure Chemical Industries), respectively, to obtain 12 g of a hydrophilic polysiloxane macromonomer I of interest.
The results of analysis of $^1$H-NMR exhibit a=about 75, b=about 25, n=about 1, m=0, and $R_2$ representing hydrogen in general formula (1).

Comparative Example 3

Synthesis was carried out by the same method as in Example 1, except that the amount of LS8600 was changed to 1.5 g, to obtain 98 g of an intermediate G. Furthermore, synthesis and washing were carried out by the same method as in Example 2, except that intermediate A was substituted with 15 g of intermediate G and methoxy polyethylene glycol allyl ether (Uniox PKA5007 in Example 2) was substituted with 7.5 g of Uniox PKA5010 having a molecular weight of about 1500 (NOF Corporation), to obtain 10 g of a hydrophilic polysiloxane macromonomer J of interest.

The results of analysis of $^1$H-NMR exhibit a=about 110, b=about 1, n=about 35, m=0, and $R_2$ representing $CH_3$ in general formula (1).

Example 10

The hydrophilic polysiloxane macromonomer A synthesized in Example 2, N- methyl- N- vinylacetamide, N-vinyl pyrrolidone, isobornyl methacrylate, triallyl isocyanurate, and a polymerization initiator 2, 4, 6- trimethylbenzoyldiphenylphosphine oxide were mixed and stirred at a weight ratio of 66: 18: 10: 6: 0.1: 0.1. This mixed liquid was put in a mold for a contact lens, made of Soarlite S (The Nippon Synthetic Chemical Industry Co., Ltd.) comprising ethylene vinyl alcohol resin, and was irradiated with ultraviolet light in a photoirradiation device for 1 hour to obtain a lenticular polymer. This polymer was immersed overnight in ethyl alcohol and then immersed in water all day long. This lens was transferred into a physiological saline solution (ISO 18369- 3: 2006) and then sterilized in an autoclave to provide a contact lens A. The contact lens A was transparent and flexible, and also had good water wettability.
On assessing properties, a water content was 37%, a contact angle was 41°, an oxygen permeability coefficient (Dk) was 130, and tensile strength was 1.5 MPa.
It is to be noted that each- property was determined by the following method:

(1) Optical transparency

By visual observation.
Good: no cloudiness, good transparency
Average: cloudiness, semitransparency
Poor: clouded, no transparency

(2) Wettability

Wettability with a physiological saline solution was assessed by visual observation. A lens immersed in a physiological saline solution for 24 hours or longer was perpendicularly raised from the physiological saline solution.
Good: A water film was held on more than half of the lens surface for ≥5 seconds.
Average: 1 to 5 seconds.
Poor: <1 second.

(3) Water content

The lens was placed in a physiological saline solution at 37°C for 72 hours, and then taken out, and water on the surface was wiped off to weigh the lens. The lens was then dried under vacuum at 60°C up to constant weight, and the water content was determined by the following equation using a variation in the weight of the lens.

$$\text{Water content} = (\text{weight variation} / \text{weight prior to drying}) \times 100$$

(4) Contact angle

A contact angle measuring apparatus DropMaster 500 (Kyowa Interface Science) was used to measure a contact angle between a material surface and a water droplet at 25°C.

(5) Oxygen permeability

An oxygen permeability was measured according to a method described in "A single- lens polarographic measurement of oxygen permeability (Dk) for hypertransmissible soft contact lenses" (Biomaterials, 28 (2007), 4331- 4342) . The oxygen permeability was measured in $(ml \cdot cm/cm^2 \cdot sec \cdot mmHg) \times 10^{-11}$.

(6) Tensile strength

Tensile strength was measured in a physiological saline solution of 25°C using a tensile testing machine AGS-50B (Shimadzu Corporation). The central area (width of 3 mm) of the lens was cut out to measure its strength in breaking. The strength was measured in MPa.

Examples 11-14

The hydrophilic polysiloxane macromonomer A was substituted with hydrophilic polysiloxane macromonomers B to E, and contact lenses B to E were produced by the same method as in Example 10 to assess their physical properties. The assessment results are shown in Table 1.

Example 15

The hydrophilic polysiloxane macromonomer A synthesized in Example 2, N- methyl- N- vinylacetamide, N-vinyl pyrrolidone, hydroxybutyl methacrylate, $\alpha$- butyl- $\omega$- {3- [2- (2- methacryloxyethylcarbamoyloxy) ethoxylpropyl} po lydimethylsiloxane, isobornyl methacrylate, triallyl isocyanurate, 2, 4, 6- trimethylbenzoyldiphenylphosphine oxide, and dioctyl sulfosuccinate sodium salt as an additive were mixed and stirred at a weight ratio of 44: 10: 30: 10: 10: 6: 0.1: 0.1: 0.5. This mixed liquid was put in a mold for a contact lens, made of Soarlite S (The Nippon Synthetic Chemical Industry Co., Ltd.), and was irradiated with ultraviolet light in a photoirradiation device for 1 hour to obtain a lenticular polymer. This polymer was immersed overnight in ethyl alcohol and then immersed in water all day long. This lens was transferred into a physiological saline solution (ISO 18369- 3: 2006) and then sterilized in an autoclave to provide a contact lens F. The contact lens F was transparent and flexible, and also had good water wettability.
On assessing properties, a water content was 44%, a contact angle was 44°, an oxygen permeability coefficient (Dk) was 115, and tensile strength was 3.0 MPa.

Examples 16-17

The hydrophilic polysiloxane macromonomer A in Example 15 was substituted with the hydrophilic polysiloxane macromonomers F to G, and contact lenses G to H were produced by the same method as in Example 17, and their properties were assessed. The assessment results are shown in Table 1.

Example 18

The hydrophilic polysiloxane macromonomer A synthesized in Example 2, N- methyl- N- vinylacetamide, methyl methacrylate, triethylene glycol dimethacrylate, 2- hydroxy- 4- acryloxyethoxybenzophenone, 2, 2'- azobis (2, 4- dimethylvaleronitriles), and dimethylsiloxan- ethylene oxide block copolymer (DBE712, Gelest) as an additive were mixed and stirred at a weight ratio of 35: 47: 17: 0.2: 0.9: 0.5: 25. Decompression and nitrogen purge of this mixed liquid were repeated twice to fully remove oxygen from the mixed liquid, followed by putting the mixed liquid in a mold for a contact lens, made of polypropylene. Furthermore, the mold was placed in a chamber for exclusive use, and nitrogen substitution was performed, followed by heating the mold for 30 minutes at 55°C, and subsequently for 60 minutes at 80°C, to obtain a lenticular polymer. This polymer was immersed overnight in ethyl alcohol and then immersed in water all day long. This lens was transferred into a physiological saline solution (ISO 18369- 3: 2006) and then sterilized in an autoclave to provide a contact lens I. The contact lens I was transparent and flexible, and also had good water wettability.
On assessing properties, a water content was 40%, a contact angle was 42°, an oxygen permeation coefficient (Dk) was 110, and tensile strength was 2.5 MPa.

Comparative Examples 4-6

The hydrophilic polysiloxane macromonomer A in Example 10 was substituted with the hydrophilic polysiloxane macromonomers H to J, and contact lenses J to L were produced by the same method as in Example 10 to assess their physical properties. The assessment results are shown in Table 1.

Table 1

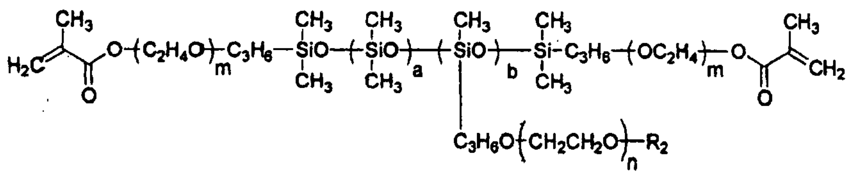

(In the formula the configuration of siloxane units includes a random configuration.)

| | Example | | | | | | | | | Comparative example | | |
|---|---|---|---|---|---|---|---|---|---|---|---|---|
| | 10 | 11 | 12 | 13 | 14 | 15 | 16 | 17 | 18 | 4 | 5 | 6 |
| Contact lens | A | B | C | D | E | F | G | H | I | J | K | L |
| Hydrophilic polysiloxane macromonomer | A | B | C | D | E | A | F | G | A | H | I | J |
| a | ca.90 | ca.90 | ca.90 | ca.85 | ca.130 | ca.90 | ca.85 | ca. 160 | ca.90 | ca.15 | ca.75 | ca.110 |
| b | ca.5 | ca.5 | ca.5 | ca.10 | ca.5 | ca.5 | ca.10 | ca.4 | ca.5 | 0 | ca.25 | ca.1 |
| n | ca.7 | ca.7 | ca.35 | ca.7 | ca.7 | ca.7 | ca.15 | ca.7 | ca.7 | 0 | ca.1 | ca.35 |
| m | 0 | 0 | 0 | 0 | 0 | 0 | 0 | 1 | 0 | 0 | 0 | 0 |
| R2 | $CH_3$ | H | $CH_3$ | $CH_3$ | $CH_3$ | $CH_3$ | H | $CH_3$ | $CH_3$ | - | H | $CH_3$ |
| a+b | ca.95 | ca.95 | ca.95 | ca.95 | ca.135 | ca.95 | ca.95 | ca. 164 | ca.95 | ca.15 | ca. 100 | ca.111 |
| b/(a+b) | ca.0.05 | ca.0.05 | ca.0.05 | ca.0.11 | ca.0.04 | ca.0.05 | ca. 0.11 | ca. 0.02 | ca. 0.05 | 0 | ca. 0.25 | ca. 0.009 |
| Transparency | good | good | good | good | good | good | good | good | good | poor | good | poor |
| Water wettability | good | good | good | good | good | good | good | good | good | poor | poor | poor |
| Water content (%) | 37 | 38 | 55 | 45 | 32 | 44 | 55 | 30 | 40 | 11 | 45 | 21 |
| Contact angle (°) | 41 | 37 | 30 | 32 | 47 | 44 | 40 | 50 | 42 | 102 | 70 | 92 |
| Oxygen permeability† | 130 | 125 | 90 | 95 | 140 | 115 | 90 | 150 | 110 | 20 | 30 | 130 |

(continued)

| 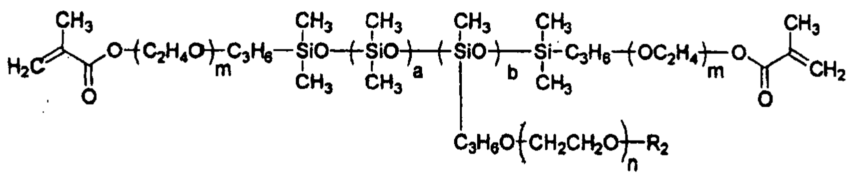 | | | | | | | | | | | | (In the formula the configuration of siloxane units includes a random configuration.) |
|---|---|---|---|---|---|---|---|---|---|---|---|---|
| | Example | | | | | | | | | Comparative example | | |
| | 10 | 11 | 12 | 13 | 14 | 15 | 16 | 17 | 18 | 4 | 5 | 6 |
| Tensile strength (MPa) | 1.5 | 1.7 | 1.2 | 1.6 | 1.2 | 3.0 | 3.0 | 2.8 | 2.5 | 1.1 | 0.9 | 0.7 |
| † Unit: (ml·cm/cm$^2$·sec·mmHg)$\times 10^{-11}$ | | | | | | | | | | | | |

Dissolution of 74.97 g of 1, 3- bis (3- methacryloxypropyl)- 1, 1, 3, 3- tetramethyldisiloxane (TSL9706, Momentive), 1617.17 g of octamethylcyclotetrasiloxane (LS8620, Shin- Etsu Chemical), and 87.25 g of 1, 3, 5, 7- tetramethylcyclotetrasiloxane (LS8600, Shin- Etsu Chemical) in 1347.63 g of chloroform was performed, 10.06 g of trifluoromethanesulfonic acid (Wako Pure Chemical Industries) was further added, and this mixture was stirred at 35°C. After 18 hours, 1347.64 g of a 0.5% aqueous sodium hydrogen carbonate solution was added and stirred at room temperature for 6 hours to stop the reaction. After settled separation, the upper layer was removed, and the reaction liquid was washed with 1347 g of pure water seven times, followed by distilling out the reaction solvent under reduced pressure to obtain 1603.3 g of a residue. To the residue, 320 g of acetone was added to uniformalize this mixture, and 1603 g of methanol was added to the mixture to vigorously stir this mixture, followed by centrifugation (7000 rpm, 10°C, 10 minutes) of the mixture, followed by removing the upper layer. This operation was repeated seven times, and the solvent was distilled out under reduced pressure to obtain 1105.7 g of an intermediate H.

Example 20

Dissolution of 45.05 g of the intermediate H and 30.05 g of polyethylene glycol allyl ether having a molecular weight of about 400 (Uniox PKA5002, NOF Corporation) in 90.45 g of isopropanol was performed, 0.46 g of a 10% potassium acetate/ ethanol solution, 0.91 g of a 1% isopropanol solution of chloroplatinic acid and 5.9 mg of 2, 6- di- t-butyl- 4- methyl phenol (BHT) were further added to this mixture, and this mixture was heated to reflux for 1 hour in an oil bath at 93°C. The reaction solvent was distilled out under reduced pressure, and 60 g of acetone and 30 g of pure water were added to the residue to vigorously stir this mixture, followed by centrifugation (7000 rpm, 10°C, 10 minutes) of the mixture, followed by removing the upper layer. This operation was repeated ten times, and 3.3 mg of BHT, 2.0 mg of p- methoxyphenol (MQ) and 60 g of isopropanol were added to this mixture, and vacuum concentration of this mixture was carried out. Furthermore, 50 g of isopropanol was added to this mixture, vacuum concentration of this mixture was carried out, and 2.2 mg of BHT and 0.8 mg of MQ were added to this mixture to obtain 55.35 g of a hydrophilic polysiloxane macromonomer K of interest.
The results of analysis of $^1$H- NMR exhibit a=about 124, b=about 7, n=about 7, m=0, and $R_2$ representing $CH_3$ in general formula (3) .

Example 21

Synthesis was carried out by the same method as in Example 20, except that polyethylene glycol allyl ether (Uniox PKA5002, NOF Corporation) used in Example 20 was substituted with methoxy polyethylene glycol allyl ether having a molecular weight of about 400 (Uniox PKA5007, NOF Corporation), to obtain 56.83 g of a hydrophilic polysiloxane macromonomer L of interest.
The results of analysis of $^1$H-NMR exhibit a=about 124, b=about 7, n=about 7, m=0, and $R_2$ representing $CH_3$ in the general formula (3).

Example 22

Synthesis was carried out by the same method as in Example 19, except that the amount of LS8600 was changed to 104.7 g, to obtain an intermediate I. Furthermore, 45.13 g of the intermediate I and 36.03 g of methoxy polyethylene glycol allyl ether (Uniox PKA5007, NOF Corporation) were dissolved in 90.14 g of isopropanol, and synthesis and washing were carried out by the same method as in Example 20 to obtain 56.80 g of a hydrophilic polysiloxane macromonomer M of interest.
The results of analysis of $^1$H-NMR exhibit a=about 123, b=about 9, n=about 7, m=0, and $R_2$ representing $CH_3$ in general formula (3).

Examples 23-25

The hydrophilic polysiloxane macromonomer A in Example 15 was substituted with the hydrophilic polysiloxane macromonomers K to M, contact lenses M to O were produced by the same method as in Example 18, respectively, and their physical properties were assessed. The assessment results are shown in Table 2.

Table 2

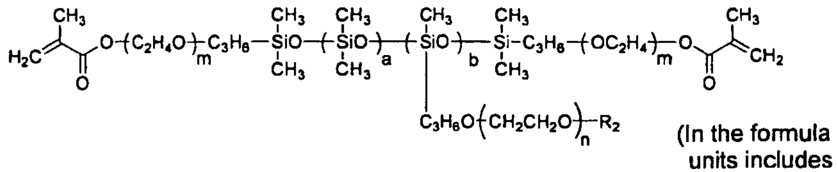

(In the formula the configuration of siloxane units includes a random configuration.)

| | Example | | |
|---|---|---|---|
| | 23 | 24 | 25 |
| Contact lens | M | N | O |
| Hydrophilic polysiloxane macromonomer | K | L | M |
| a | ca.124 | ca.124 | ca.123 |
| b | ca.7 | ca.7 | ca.9 |
| n | ca.7 | ca.7 | ca.7 |
| m | 0 | 0 | 0 |
| $R_2$ | H | $CH_3$ | $CH_3$ |
| a+b | ca.131 | ca.131 | ca.132 |
| b/( a+b) | ca.0.05 | ca.0.05 | ca.0.07 |
| Transparency | good | good | good |
| Water wettability | good | good | good |
| Water content (%) | 48 | 46 | 49 |
| Contact angle (°) | 35 | 34 | 37 |
| Oxygen permeability † | 110 | 125 | 105 |
| Tensile strength (MPa) | 0.8 | 0.8 | 0.7 |
| † Unit: $(ml \cdot cm/cm^2 \cdot sec \cdot mmHg) \times 10^{-11}$ | | | |

Industrial applicability

Because a hydrophilic polysiloxane macromonomer of the present invention has good compatibility with polymerizable mixtures containing a hydrophilic monomer, a transparent copolymer is afforded. The copolymer having both of high oxygen permeability and a high hydrophilic property of the material is useful as a raw material for an ophthalmic lens, more specifically, an ophthalmic lens with a high hydrophilic property and high oxygen permeability, in particular, a contact lens material.

## Claims

1. A hydrophilic polysiloxane macromonomer represented by general formula (1):

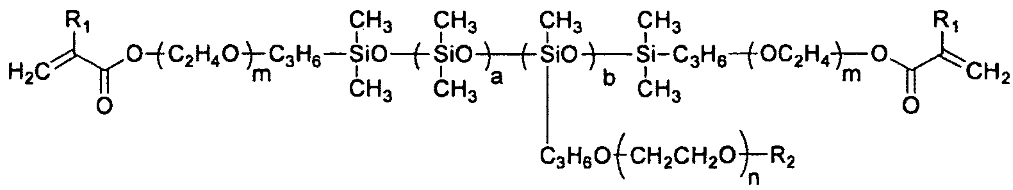

(1)

wherein R1 is selected from either hydrogen or a methyl group; R2 is selected from either of hydrogen or a $C_{1-4}$ hydrocarbon group; m represents an integer of from 0 to 10; n represents an integer of from 4 to 100; a and b represent integers of 1 or more; a+b is equal to 20-500; b/(a+b) is equal to 0.01-0.22; and the configuration of siloxane units includes a random configuration.

2. The hydrophilic polysiloxane macromonomer according to claim 1, wherein a and b, which are presented in the general formula (1), represent 25-200 and 2-20, respectively.

3. The hydrophilic polysiloxane macromonomer according to either of claim 1 or claim 2, wherein n presented in the general formula (1) represents 5 to 20.

4. The hydrophilic polysiloxane macromonomer according to any one of claim 1 to claim 3, wherein a and b, which are presented in the general formula (1), represent 25-160 and 3-10, respectively, and n represents 5-15.

5. A method of producing the hydrophilic polysiloxane macromonomer according to claim 1, comprising a step of producing a polysiloxane intermediate represented by general formula (2) described below:

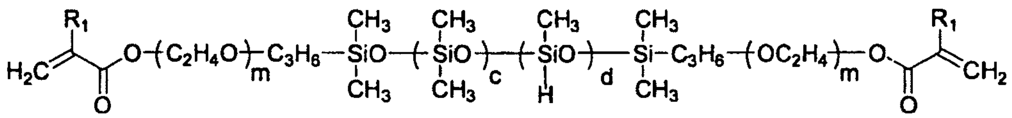

(2)

wherein $R_1$ is selected from either hydrogen or a methyl group; m represents an integer of from 0 to 10; c and d represent integers of 1 or more; c+d is equal to 20-500; d/(c+d) is equal to 0.01-0.22; and the configuration of siloxane units includes a random configuration and comprising hydrosilylation reaction of the intermediate represented by general formula (2) with polyethylene glycol allyl ether represented by general formula (3):

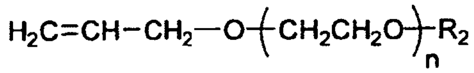

(3)

wherein R2 is selected from either hydrogen or a $C_{1-4}$ hydrocarbon group; and n represents an integer of from 4 to 100.

6. The method of producing the hydrophilic polysiloxane macromonomer according to claim 5, wherein the step of producing the intermediate represented by general formula (2) is carried out using an acid catalyst.

**7.** The method of producing the hydrophilic polysiloxane macromonomer according to claim 5, wherein the step of producing the intermediate represented by general formula (2) is carried out by ring-opening polymerization of cyclic dimethylsiloxane, cyclic siloxane having hydrosilane (Si-H), and siloxane having (meth) acrylic groups at both terminals.

**8.** The method of producing the hydrophilic polysiloxane macromonomer according to claim 7, wherein the step of producing the intermediate represented by general formula (2) is stopped the reaction by neutralization reaction with a basic aqueous solution.

**9.** The method of producing the hydrophilic polysiloxane macromonomer according to claim 5, wherein a platinum-containing catalyst is used as the catalyst for the hydrosilylation reaction.

**10.** The method of producing the hydrophilic polysiloxane macromonomer according to claim 5 or 9, further comprising the step of washing the hydrophilic polysiloxane macromonomer with a solvent.

**11.** A homopolymer of the hydrophilic polysiloxane macromonomer according to any one of claim 1 to claim 4, or a copolymer copolymerized with one or more polymerizable monomers.

**12.** An ophthalmic lens material comprising at least a polymer according to claim 11.

**13.** An ophthalmic lens comprising the material according to claim 12.

**14.** A contact lens comprising the material according to claim 12.

**Patentansprüche**

**1.** Hydrophiles Polysiloxan-Makromonomer, das durch die allgemeine Formel (1) dargestellt ist:

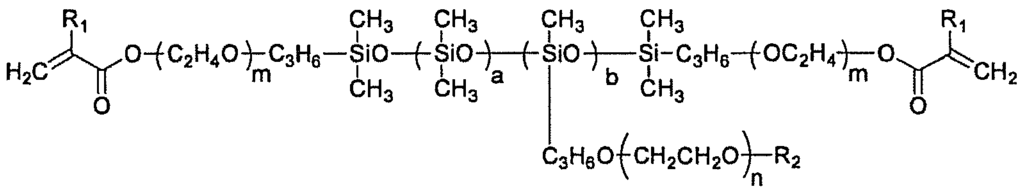

(1)

wobei R1 entweder aus Wasserstoff oder einer Methylgruppe ausgewählt ist; R2 entweder aus Wasserstoff oder einer $C_{1-4}$ Kohlenwasserstoffgruppe ausgewählt ist; m eine ganze Zahl von 0 bis 10 darstellt; n eine ganze Zahl von 4 bis 100 darstellt; a und b ganze Zahlen von 1 oder größer darstellen; a + b gleich 20 - 500 ist; b / (a + b) gleich 0,01 bis 0,22 ist; und die Konfiguration der Siloxaneinheiten eine randomisierte Konfiguration beinhaltet.

**2.** Das hydrophile Polysiloxan-Makromonomer nach Anspruch 1, wobei a und b, die in der allgemeinen Formel (1) angegeben sind, 25 - 200 beziehungsweise 2 - 20 darstellen.

**3.** Das hydrophile Polysiloxan-Makromonomer entweder nach Anspruch 1 oder nach Anspruch 2, wobei n, das in der allgemeinen Formel (1) angegeben ist, 5 bis 20 darstellt.

**4.** Das hydrophile Polysiloxan-Makromonomer nach einem der Ansprüche 1 bis 3, wobei a und b, die in der allgemeinen Formel (1) angegeben sind, 25 - 160 beziehungsweise 3 - 10 darstellen, und n 5 - 15 darstellt.

**5.** Verfahren zur Herstellung des hydrophilen Polysiloxan-Makromonomers nach Anspruch 1, umfassend einen Schritt zur Herstellung eines Polysiloxan-Zwischenprodukts, das durch die allgemeine Formel (2), die unten beschrieben ist, dargestellt ist:

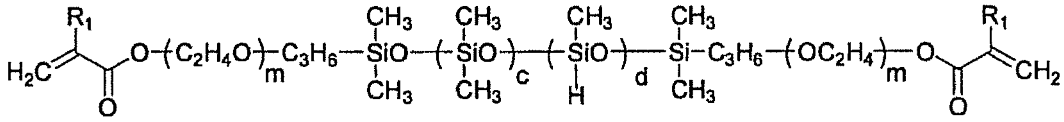

(2)

wobei R1 entweder aus Wasserstoff oder einer Methylgruppe ausgewählt ist; m eine ganze Zahl von 0 bis 10 darstellt; c + d gleich 20 - 500 ist; d / (c + d) gleich 0,01 bis 0,22 ist; und die Konfiguration der Siloxaneinheiten eine randomisierte Konfiguration beinhaltet und eine Hydrosilylierungsreaktion des Zwischenprodukts, das durch die allgemeine Formel (2) dargestellt ist, mit einem Polyethylenglykol- Allylether, der durch die allgemeine Formel (3) dargestellt ist:

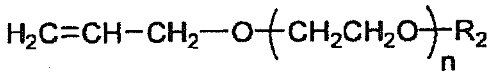

(3)

umfasst; wobei R2 entweder aus Wasserstoff oder einer $C_{1-4}$ Kohlenwasserstoffgruppe ausgewählt ist; und n eine ganze Zahl von 4 bis 100 darstellt.

**6.** Das Verfahren zur Herstellung des hydrophilen Polysiloxan-Makromonomers nach Anspruch 5, wobei der Schritt zur Herstellung des Zwischenprodukts, das durch die allgemeine Formel (2) dargestellt ist, unter Verwendung eines Säurekatalysators durchgeführt wird.

**7.** Das Verfahren zur Herstellung des hydrophilen Polysiloxan-Makromonomers nach Anspruch 5, wobei der Schritt zur Herstellung des Zwischenprodukts, das durch die allgemeine Formel (2) dargestellt ist, durch eine ringöffnende Polymerisation von einem cyclischen Dimethylsiloxan, einem cyclischen Siloxan mit Hydrosilan (Si-H), und einem Siloxan mit (Meth)acrylgruppen an beiden Enden durchgeführt wird.

**8.** Das Verfahren zur Herstellung des hydrophilen Polysiloxan-Makromonomers nach Anspruch 7, wobei beim Schritt zur Herstellung des Zwischenprodukts, das durch die allgemeine Formel (2) dargestellt ist, die Umsetzung gestoppt wird durch eine Neutralisierungsreaktion mit einer basischen wässrigen Lösung.

**9.** Das Verfahren zur Herstellung des hydrophilen Polysiloxan-Makromonomers nach Anspruch 5, wobei ein Platinhaltiger Katalysator als Katalysator für die Hydrosilylierungsreaktion verwendet wird.

**10.** Das Verfahren zur Herstellung des hydrophilen Polysiloxan-Makromonomers nach Anspruch 5 oder Anspruch 9, das ferner den Schritt des Waschens des hydrophilen Polysiloxan-Makromonomers mit einem Lösungsmittel umfasst.

**11.** Homopolymer des hydrophilen Polysiloxan-Makromonomers gemäß einem der Ansprüche 1 bis 4, oder ein Copolymer, das mit einem oder mehreren polymerisierbaren Monomer(en) copolymerisiert ist.

**12.** Ophthalmisches Linsenmaterial, umfassend mindestens ein Polymer gemäß Anspruch 11.

**13.** Ophthalmische Linse, umfassend das Material gemäß Anspruch 12.

**14.** Kontaktlinse, umfassend das Material gemäß Anspruch 12.

## Revendications

**1.** Macromonomère de polysiloxane hydrophile représenté par la formule générale (1) :

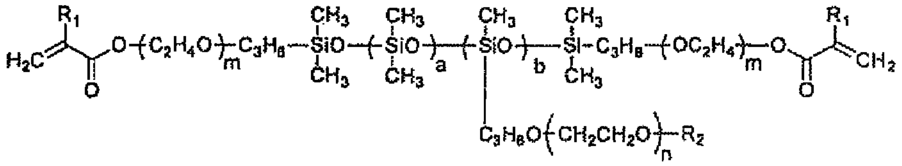

(1)

dans laquelle $R_1$ est choisi parmi l'un ou l'autre d'un atome d'hydrogène ou d'un groupe méthyle ; $R_2$ est choisi parmi l'un ou l'autre d'un atome d'hydrogène ou d'un groupe hydrocarbure en $C_1$- $C_4$ ; m représente un entier de 0 à 10 ; n représente un entier de 4 à 100 ; a et b représentent des entiers de 1 ou plus ; a+b est égal à 20- 500 ; b/(a+b) est égal à 0, 01- 0, 22 ; et la configuration des unités de siloxane inclut une configuration aléatoire.

2. Macromonomère de polysiloxane hydrophile selon la revendication 1, dans lequel a et b, qui sont présentés dans la formule générale (1), représentent respectivement 25-200 et 2-20.

3. Macromonomère de polysiloxane hydrophile selon l'une quelconque de la revendication 1 ou de la revendication 2, dans lequel n présenté dans la formule générale (1) représente 5 à 20.

4. Macromonomère de polysiloxane hydrophile selon l'une quelconque des revendications 1 à 3, dans lequel a et b, qui sont présentés dans la formule générale (1), représentent 25-160 et 3-10, respectivement, et n représente 5-15.

5. Procédé de production du macromonomère de polysiloxane hydrophile selon la revendication 1, comprenant une étape de production d'un intermédiaire de polysiloxane représenté par la formule générale (2) indiquée ci- dessous :

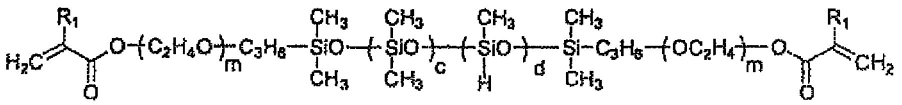

(2)

dans laquelle $R_1$ est choisi parmi l'un ou l'autre d'un atome d'hydrogène ou d'un groupe méthyle; m représente un entier de 0 à 10 ; c et d représentent des entiers de 1 ou plus ; c+d est égal à 20- 500 ; d/ (c+d) est égal à 0, 01- 0, 22 ; et la configuration des unités de siloxane inclut une configuration aléatoire et comprenant la réaction d'hydrosilylation de l'intermédiaire représenté par la formule générale (2) avec un éther allylique de glycol représenté par la formule générale (3) :

$$H_2C{=}CH-CH_2-O\left(CH_2CH_2O\right)_n R_2 \qquad (3)$$

dans laquelle $R_2$ est choisi parmi l'un ou l'autre d'un atome d'hydrogène ou d'un groupe hydrocarbure en $C_1$- $C_4$ ; et n représente un entier de 4 à 100.

6. Procédé de production du macromonomère de polysiloxane hydrophile selon la revendication 5, dans lequel l'étape de production de l'intermédiaire représenté par la formule générale (2) est effectuée en utilisant un catalyseur acide.

7. Procédé de production du macromonomère de polysiloxane hydrophile selon la revendication 5, dans lequel l'étape de production de l'intermédiaire représenté par la formule générale (2) est effectuée par une polymérisation par ouverture de cycle du diméthylsiloxane cyclique, le siloxane cyclique possédant un hydrosilane (Si-H), et le siloxane possédant des groupes méth(acryliques) aux deux extrémités.

8. Procédé de production du macromonomère de polysiloxane hydrophile selon la revendication 7, dans lequel étape de production de l'intermédiaire représenté par la formule générale (2) est stoppée par réaction de neutralization avec une solution aqueuse basique.

9. Procédé de production du macromonomère de polysiloxane hydrophile selon la revendication 5, dans lequel un catalyseur contentant du platiné est utilisé en tant que catalyseur pour la réaction d'hydrosilylation.

10. Procédé de production du macromonomère de polysiloxane hydrophile selon la revendication 5 ou 9, comprenant

en outre l'étape de lavage du macromonomère de polysiloxane hydrophile avec un solvant.

**11.** Homopolymère du macromonomère de polysiloxane hydrophile selon l'une quelconque des revendications 1 à 4, ou copolymère copolymérisé avec un ou plusieurs monomères polymérisables.

**12.** Matériau pour lentille ophtalmique comprenant au moins un polymère selon la revendication 11.

**13.** Lentille ophtalmique comprenant le matériau selon la revendication 12.

**14.** Lentille de contact comprenant le matériau selon la revendication 12.

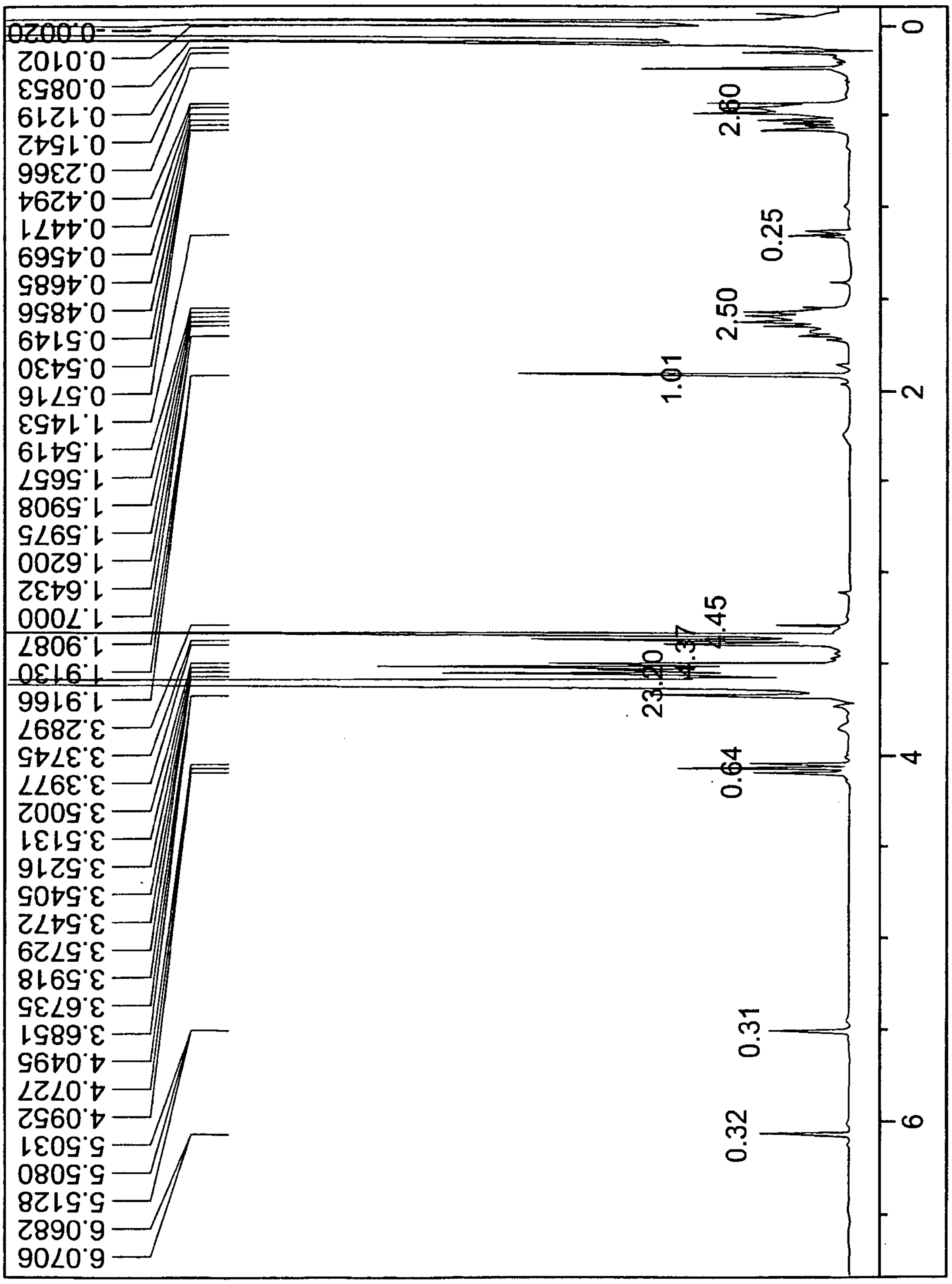
0.0020
0.0102
0.0853
0.1219
0.1542
0.2366
0.4294
0.4471
0.4569
0.4685
0.4856
0.5149
0.5430
0.5716
1.1453
1.5419
1.5657
1.5908
1.5975
1.6200
1.6432
1.7000
1.9087
1.9130
1.9166
3.2897
3.3745
3.3977
3.5002
3.5131
3.5216
3.5405
3.5472
3.5729
3.5918
3.6735
3.6851
4.0495
4.0727
4.0952
5.5031
5.5080
5.5128
6.0682
6.0706
2.80
0.25
2.50
1.01
4.45
0.64
0.31
0.32
0
2
4
6

FIGURE 1

Fig.2

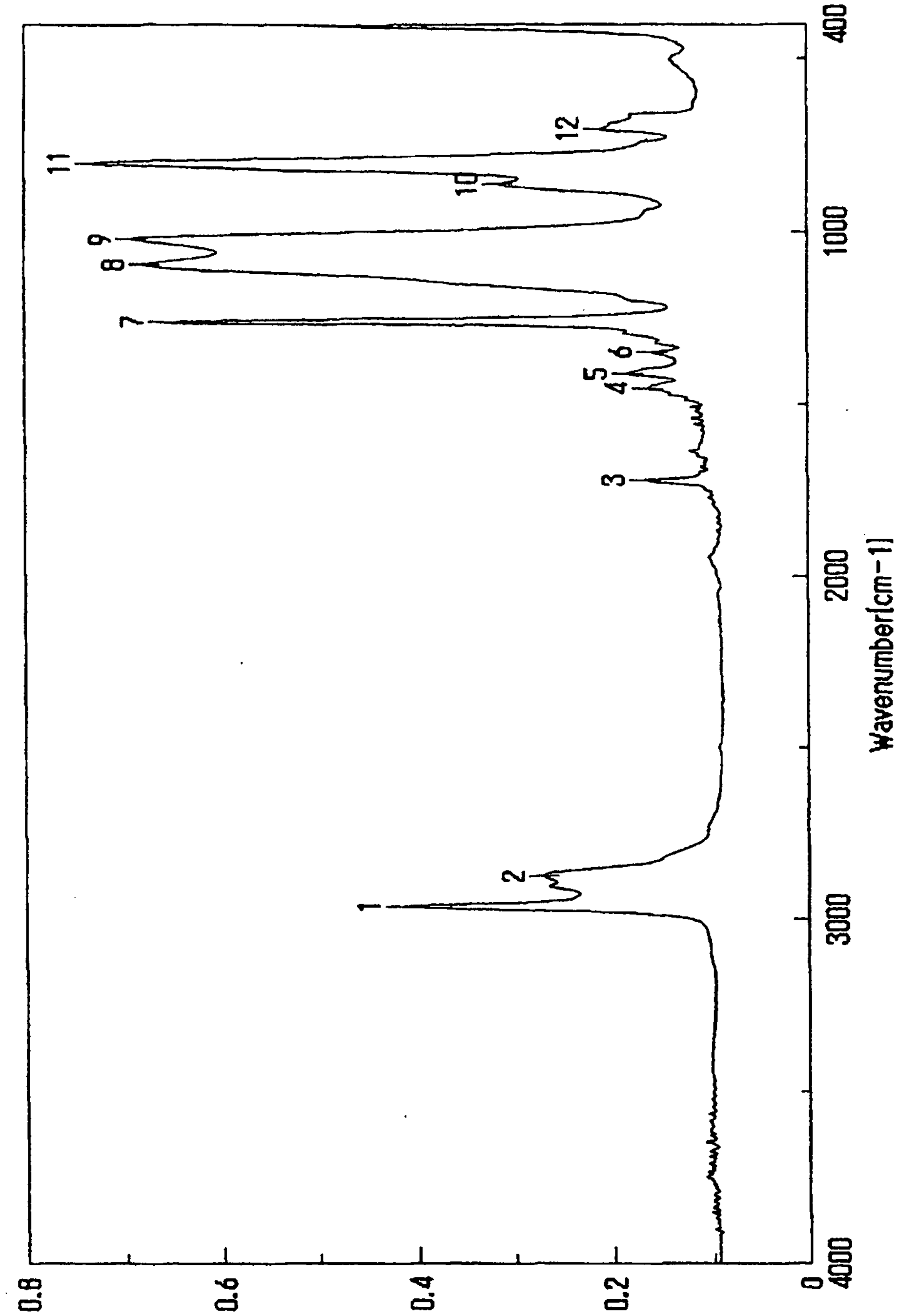
Abs
0.8
0.6
0.4
0.2
0
4000
3000
2000
1000
400
Wavenumber[cm-1]
1
2
3
4
5
6
7
8
9
10
11
12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62029776 A
- JP 62029777 A
- JP 3644177 B
- WO 01044861 A
- WO 2006026474 A
- JP 3441024 B
- US 4260725 A
- JP 2003192790 A
- JP H11502949 B
- US 5260000 A
- JP 2003528183 A
- WO 2004063795 A
- JP 2001311917 A
- JP 2003528183 PCT


### Non-patent literature cited in the description


- A single-lens polarographic measurement of oxygen permeability (Dk) for hypertransmissible soft contact lenses. *Biomaterials,* 2007, vol. 28, 4331-4342